(19) Europäisches Patentamt
European Patent Office
Office européen des brevets

(11) **EP 3 761 648 A1**

(12) # EUROPEAN PATENT APPLICATION

(43) Date of publication:
**06.01.2021 Bulletin 2021/01**

(51) Int Cl.:
*H04N 21/233* [(2011.01)]  *H04N 21/25* [(2011.01)]
*H04N 21/258* [(2011.01)]  *H04N 21/439* [(2011.01)]
*H04N 21/442* [(2011.01)]  *H04N 21/485* [(2011.01)]
*H04N 21/6543* [(2011.01)]  *H04N 21/658* [(2011.01)]
*H04N 21/422* [(2011.01)]

(21) Application number: **19184611.2**

(22) Date of filing: **05.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Vestel Elektronik Sanayi ve Ticaret A.S.**
**45030 Manisa (TR)**

(72) Inventor: **ULUAG, Onur**
**45030 Mansia (TR)**

(74) Representative: **Maikowski & Ninnemann**
**Patentanwälte Partnerschaft mbB**
**Postfach 15 09 20**
**10671 Berlin (DE)**

(54) **METHOD OF AUTOMATICALLY ADJUSTING AN AUDIO LEVEL AND SYSTEM FOR AUTOMATICALLY ADJUSTING AN AUDIO LEVEL**

(57)    The present disclosure relates to a method (100) of automatically adjusting an audio level, comprising: providing (110), by a plurality of user devices, telemetry data to a cloud-based service; detecting (120), by the cloud-based service, a crowd behaviour of users of the plurality of user devices based on the telemetry data; and adjusting (130) an audio level of at least one user device in real-time based on the detected crowd behaviour.

<u>100</u>

providing, by a plurality of user devices, telemetry data to a cloud-based service —— 110

detecting, by the cloud-based service, a crowd behaviour of users of the plurality of user devices based on the telemetry data —— 120

adjusting an audio level of at least one user device of the plurality of user devices in real-time based on the detected crowd behaviour —— 130

Fig. 1

EP 3 761 648 A1

## Description

## FIELD

Embodiments of the present disclosure relate to a method of automatically adjusting an audio level and a system for automatically adjusting an audio level. Embodiments of the present disclosure relate particularly relate to a real-time audio level adjustment based on a crowd behaviour.

## BACKGROUND

Multimedia user devices, such as TVs, smartphones and tablets, are widely used. While watching or listening to live or on-demand audio/visual streams (VoD, AoD), an audio level is adjusted continuously by the users depending on the content of the stream. For example, when switching from a TV program to a commercial, the user usually decreases the audio level. In another example, in an action movie, some scenes may require a higher audio level in order to hear the sounds and voices in the scene, and some action scenes with background music may disturb the user because of the high audio level. Further, dubbed contents (multi-language audio tracks or hard-dubbed) usually have a problem with respect to an audio level mismatch. Further, changing the content channel may also cause an audio level mismatch and disturbs the user or requires a re-adjustment of the audio level.

As described above, an audio level mismatch is not the only concern and the content of the stream also requires an audio level adjustment. For example, when breaking news appear on live streams, the user may want to increase the audio level. The audio level should change instantly because the user could miss scenes or some of the content presented in the stream e.g. while trying to find the remote controller.

In view of the above, new methods of automatically adjusting an audio level and systems for automatically adjusting an audio level, that overcome at least some of the problems in the art are beneficial.

## SUMMARY

In light of the above, a method of automatically adjusting an audio level and a system for automatically adjusting an audio level are provided.

It is an object of the present invention to automatically adjust an audio level of a user device to a level convenient for a user.

Further aspects, benefits, and features of the present disclosure are apparent from the claims, the description, and the accompanying drawings.

According to an independent aspect of the present disclosure, a method of automatically adjusting an audio level is provided. The method includes providing, by a plurality of user devices, telemetry data to a cloud-based service; detecting, by the cloud-based service, a crowd behaviour of users of the plurality of user devices based on the telemetry data; and adjusting an audio level of at least one user device in real-time based on the detected crowd behaviour.

According to another independent aspect of the present disclosure, a system for automatically adjusting an audio level is provided. The system includes a plurality of user devices configured to provide telemetry data to a cloud-based service; and cloud resources implementing the cloud-based service, wherein the cloud resources are configured to detect a crowd behaviour of users of the plurality of user devices based on the telemetry data and to adjust an audio level of at least one user device in real-time based on the detected crowd behaviour.

Embodiments are also directed at systems for carrying out the disclosed methods and include system parts for performing each described method aspect. These method aspects may be performed by way of hardware components, a computer programmed by appropriate software, by any combination of the two or in any other manner. Furthermore, embodiments according to the disclosure are also directed at methods for operating the described system. The methods include method aspects for carrying out every function of the system.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1    shows a flowchart of a method of automatically adjusting an audio level according to embodiments described herein;

FIG. 2    shows a schematic view of a system for automatically adjusting an audio level according to embodiments described herein;

FIG. 3    illustrates NAT (Network Address Translation);

FIG. 4    shows a schematic view of a system for automatically adjusting an audio level according to further embodiments described herein;

FIG. 5    shows a schematic view of a system for automatically adjusting an audio level according to further embodiments described herein;

FIG. 6    shows a schematic view of a system for automatically adjusting an audio level according to further embodiments described herein;

FIG. 7      shows a DVB signalling packet;

FIG. 8      shows a schematic view of a system for automatically adjusting an audio level according to further embodiments described herein;

FIG. 9      shows a schematic view of a system for automatically adjusting an audio level according to further embodiments described herein;

FIG. 10      illustrates audience clustering;

FIG. 11      shows a schematic view of a system for automatically adjusting an audio level according to further embodiments described herein;

FIG. 12      shows an exemplary multimodal frequency distribution;

FIG. 13      shows an exemplary probability distribution of two cluster samples; and

FIG. 14      shows mean, mode and median.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

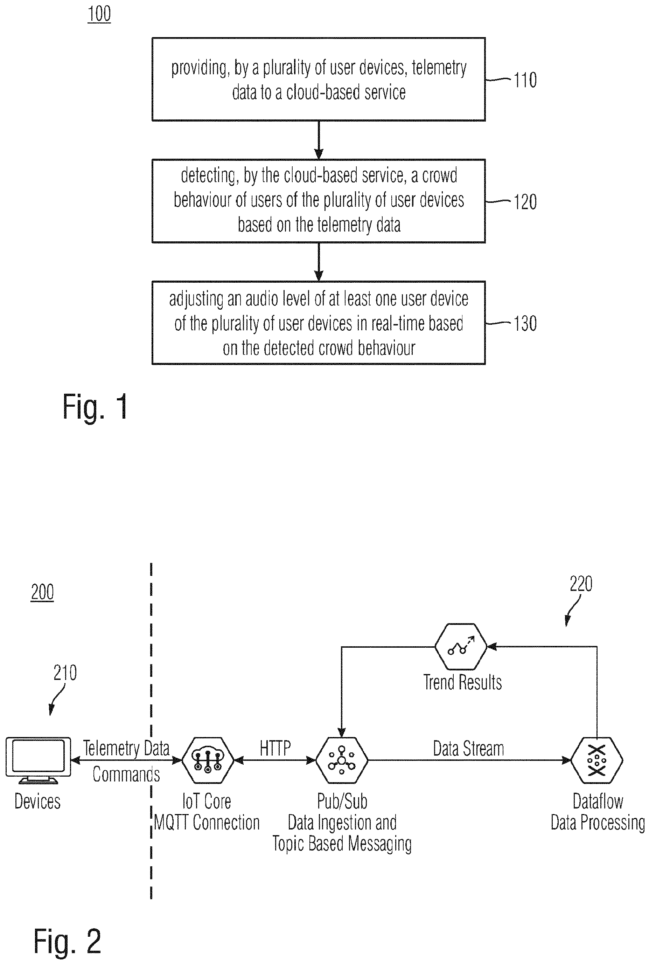

Figure 1 shows a flowchart of a method 100 of automatically adjusting an audio level according to embodiments described herein.

The method 100 includes in block 110 providing, by a plurality of user devices, telemetry data to a cloud-based service; in block 120 detecting, by the cloud-based service, a crowd behaviour of users of the plurality of user devices based on the telemetry data; and in block 130 adjusting an audio level of at least one user device e.g. of the plurality of user devices in real-time based on the detected crowd behaviour.

The present invention provides an automatic audio level adjustment of audio or audio/visual content according to a crowd behaviour by sending telemetry data from user devices to the cloud and processing the data stream using, for example, Sliding Time Windows. In some embodiments, trend analytics of the audio level of the content is determined by, for example, statistical methods and/or machine learning models, and the results are sent to the user devices, if necessary, to change the audio level for live streams or stored in an audio level file which contains timestamps and corresponding audio levels for on-demand contents.

Figure 2 shows a schematic view of a system 200 for automatically adjusting an audio level according to embodiments described herein.

The system 200 includes a plurality of user devices 210 configured to provide telemetry data to a cloud-based service; and cloud resources 220 implementing the cloud-based service, wherein the cloud resources 220 are configured to detect a crowd behaviour of users of the plurality of user devices 210 based on the telemetry data and to adjust an audio level of at least one user device e.g. of the plurality of user devices 210 in real-time based on the detected crowd behaviour.

Generally, real-time systems can be classified in three categories: Hard Real-Time, Firm Real-Time and Soft Real-Time. The present invention may be categorized as Soft Real-Time, and in particular Soft Real-Time stream analytics. The term "real-time" as used throughout the present application particularly may mean that a crowd behaviour is detected simultaneously with an audio adjustment based on such behaviour. In particular, the audio adjustment can be done in connection with a live stream, e.g. using a Sliding Time Window.

Nowadays, most TVs provide Internet connectivity via WiFi or Ethernet and connectivity rates (connected over connectable) are steadily increasing. One reason for the increasing connectivity rates are Internet based services such as multimedia streaming services and portals. Similar to TVs, STBs may also provide Internet connectivity. Accordingly, there is a growing market and one of the most promising sectors is IPTV. IPTV distributes audio/video content over the Internet infrastructure and are already connected. Therefore, according to some embodiments, which can be combined with other embodiments described herein, the plurality of user devices 210 can be selected from the group including, or consisting of, TVs, STVs, PCs, mobile phones, and media players.

The term "telemetry data" as used throughout the present application refers in particularly to data indicative of an audio level of the user device while a user watches live or on-demand content.

The term "cloud resources" as used throughout the present application refers to cloud computing which is the on-demand availability of computer system resources, especially data storage and computing power, without direct active management by the user. The term is generally used to describe data centers available to many users over the Internet.

The term "crowd behaviour" as used throughout the present application refers to a behaviour or behaviour pattern of multiple users (also referred to as "audience") in regards to a manual audio level adjustment for a particular content.

Processing of big data volumes may not be done on a single computer because of hardware limitations. Thus, data tools such as Hadoop ecosystem and Spark can be used. This enables the processing of both batch and stream data in computer clusters by distributed computation, distributed file storage and distributed memory. Further, the Apache Beam Programming Model can add an abstraction level on top of the Hadoop tools.

The system 200 of the present disclosure includes the user devices 210 and the cloud resources 220. The user devices 210 may also be referred to as "publishers". The publisher, such as a TV, STB, PC, mobile phone, connected media player, browser etc., sends audio level related telemetry data to the cloud resources 220 when a user is watching live or on-demand content.

The cloud resources 220 may include one or more components selected from the group including, or consisting of, at least one data collection unit, at least one data processing unit, at least one messaging unit, and at least one subscriber. However, the present disclosure is not limited thereto and the cloud resources can include other components suitable to implement the aspects of the present invention.

For example, the at least one data collection unit may include contains load balancers and services (preferably managed) to enable large scale data acquisition. The at least one data processing unit may be configured to process batch and/or stream data in a large scale by distributing the computation and data. The at least one messaging unit may be configured to deliver results to corresponding topics. The at least one subscriber may be configured to gather results and take necessary actions.

At least some of the above units may be combined in a single entity, or may be provided as separate entities.

An exemplary system, which implements the above components, is illustrated in figure 2. In the following, reference is made to specific architectures and cloud platforms. It is to be understood that these are only examples and that the present disclosure is not limited thereto.

Figure 2 shows an exemplary architecture of MVP (Minimum Viable Product) on GCP (Google Cloud Platform). The user device(s) 210 send(s) an audio level and optionally channel information to a cloud service provided by the cloud resources 220, and if a trend change is detected, messages are sent to the (subscribed) user device(s) 210. If a channel change occurs, the user device(s) 210 can obtain the latest trends from the cloud service to adjust the audio level to a proper volume.

The channel information can be obtained in various ways. For example, some TVs have integrated satellite decoders, and some TVs are connected to a STB (set top box) to decode the broadcast signals. If a STB is used, the TV may not know which TV channel is being watched by the user because the TV only renders data received e.g. at a HDMI port and does not know the tuned frequency or channel name. An ACR (Automatic Content Recognition) software can detect the TV channel by applying algorithms to obtain a lightweight fingerprint, thus reducing the data of the video and sending the fingerprint to web services to match the TV channel and get the channel information.

In the present example, the user device(s) 210 send(s) content ID (e.g. TV channel information, such as a channel name or a unique ID known by a cloud service), and an audio level to the cloud service. In some implementations, the audio level is normalized with respect to a total output power of the user device 210 (e.g. Watt of the speaker(s)), a scale of a volume bar, a screen size, and/or a recommended watch distance.

In some embodiments, a user device model ID can be sent together with a basic (or raw) audio volume level, and the normalization can be performed by the cloud service based on a total output power obtained from the corresponding user device model ID.

According to some embodiments, which can be combined with other embodiments described herein, the system 200, and in particular the cloud resources 220, includes an interface unit configured to provide a communication channel between the plurality of user devices 210 and the cloud resources 220. The interface unit may be configured for bi-direction communication between the plurality of user devices 210 and the cloud resources 220. For example, the telemetry data may be transferred from the plurality of user devices 210 to the cloud resources 220 via the communication channel. Optionally, commands for adjusting the audio level of at least one user device 210 may be transferred from the cloud resources 220 to the plurality of user devices 210 via the same or another communication channel.

In some implementation, the interface unit is configured to implement the MQTT (Message Queuing Telemetry Transport) protocol for communication. The MQTT protocol can be used to connect devices together. Some public cloud vendors (such as GCP, AWS, Azure) offer MQTT enabled IoT services. The protocol is designed to be simple and it positively affects both the device side in terms of processing power, memory and network bandwidth requirements, and the cloud side in terms of horizontal and vertical scalability in case of large-scale connectivity.

In the example of figure 2, the interface unit is provided by an IoT Core service used for both upstream and downstream messaging. MQTT may be the preferred protocol to connect the user devices 210 to the cloud service in a simple manner, especially for downstream messaging. In other implementations, upstream and/or downstream messaging can be performed via different communication paths. Further examples will be given throughout the description.

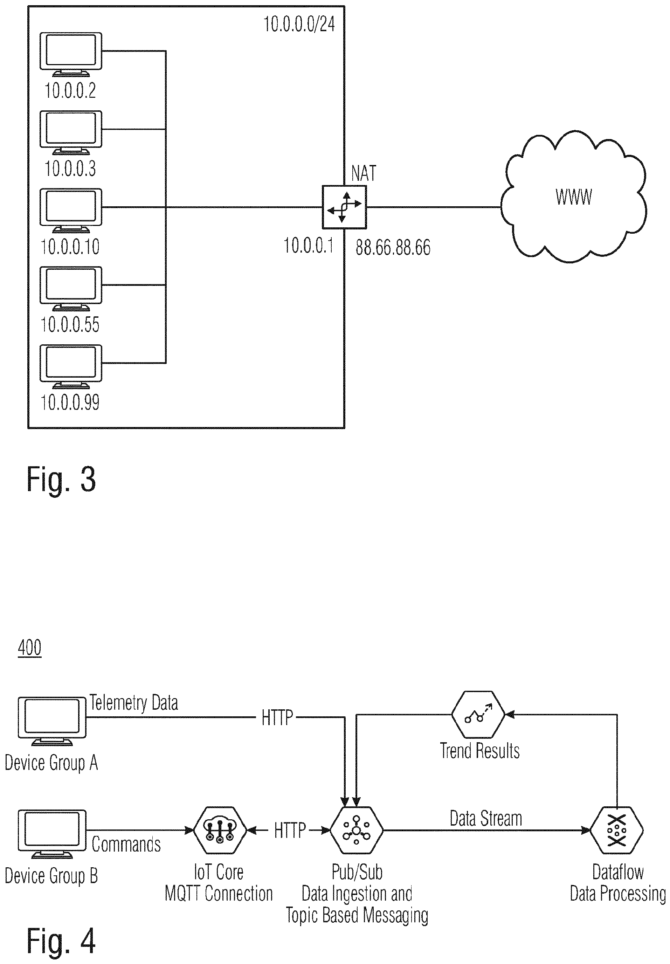

It is noted that, in the case of NAT (Network Address Translation), sending messages to sub-network devices (such as a home network) may require a setup of static port forwarding on a router. Figure 3 shows an example of NAT. Basically the initiator of the connection must be the sub-network host (user device) in order to uniquely identify the user device with the help of NAT.

In figure 2, Pub/Sub is used as a backend service for the IoT Core to handle messages coming from the MQTT broker in a topic-based manner.

Figure 4 shows a schematic view of a system 400 for automatically adjusting an audio level according to further embodiments described herein.

According to some embodiments, the plurality of user devices includes a first group (Group A) of user devices and a second group (Group B) of user devices. The first group may provide the telemetry data to the cloud service via a first communication channel. The second group may receive audio level adjustment commands from the cloud service via a second communication channel. The first communication channel may use HTTP(S). In particular, data acquisition can be done directly over Pub/Sub services using HTTP(S), without using IoT Core services and MQTT connections. Additionally, or alternatively, the second communication channel may use MQTT to provide the audio level adjustment command to the at least one user device.

The system 400 further includes processing resources ("Dataflow") for data processing. The processing resources 430 may be configured to use STW (Sliding Time Window) e.g. on fully managed, serverless systems. All of the trend analytics processes can be handled in this component. Several methods can be used to detect trends in windowed stream data. For data processing, Apache Beam offers a programming model to easily manage big data processing tasks such as MapReduce by automatically assigning mapper and reducer nodes in the cluster and distributing data.

If a change in an audio level trend is detected, user devices are notified. If a user device wants to be notified about trend changes, it can subscribe to a related topic. Messages are sent to the user devices over Pub/Sub and the IoT Core connection, i.e., the second communication channel. The user devices obtain new audio level information and take appropriate actions to change the audio level. In some implementations, an audio volume bar may or may not be shown on a display or screen of the user device(s).

Figure 4 shows a stateless (HTTP, request-response) telemetry data acquisition without a live connection. Thereby, publisher devices can be implemented more easily and a simpler and cheaper implementation on the cloud side can be achieved. In particular, maintaining a live connection between messages requires more resources and HTTP load balancers are cheaper on major cloud vendors.

A user device can be a member of both the first group of user devices ("Group A") and the second group of user devices ("Group B"), or can be a member of either the first group or the group. In particular, in one embodiment, the plurality of user devices which provide the telemetry data can also include the at least one user device which receives the audio level adjustment command. In another embodiment, as it is shown in figure 4, the plurality of user devices which provide the telemetry data do not include the at least one user device which receives the audio level adjustment command. In other words, the user devices which provide the telemetry data and the user devices which receive the audio level adjustment commands may belong to different groups of user devices.

For example, a user device can be a member of both the first group of user devices and the second group of user devices. It can be inconvenient for a user if an audio level change command arrives soon after a manual audio level change and the audio level is set by the user device according to the crowd behaviour.

A telemetry message may be sent only when the audio level is changed by the user manually, and thus the audio level should not be updated based on the crowd behaviour at least for a certain or predetermined period of time. For example, the audio level adjustment command may be sent to all subscribed user devices, and a client-side timeout protection can be implemented. In other words, a predetermined period of time after the sending of the telemetry message may be set during which audio level adjustment commands are rejected and/or not executed.

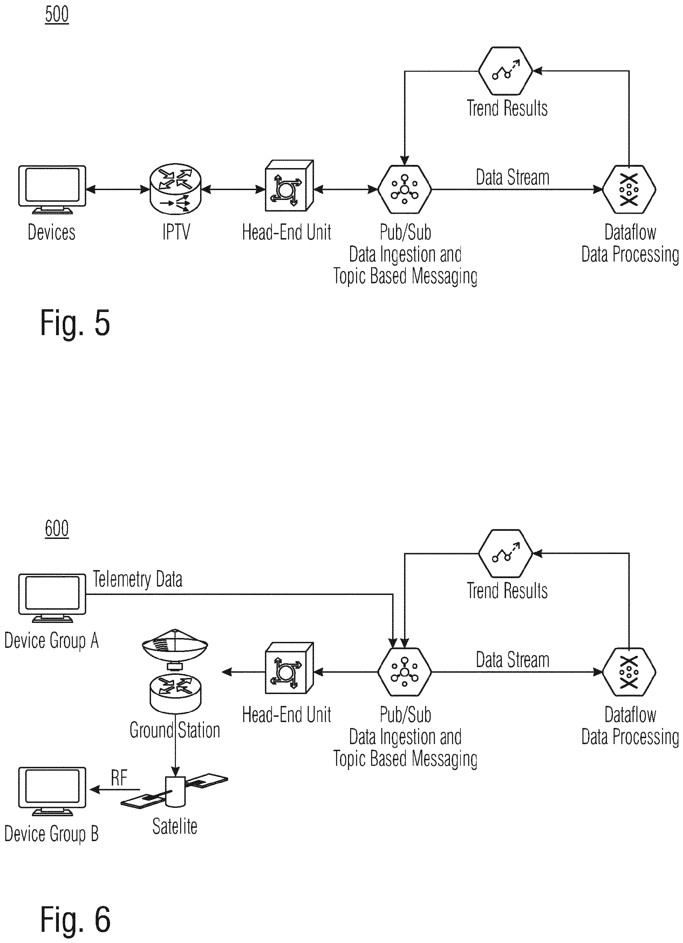

Figure 5 shows a schematic view of a system 500 for automatically adjusting an audio level according to further embodiments described herein.

The system 500 of figure 5 uses IPTV. The IPTV infrastructure enables user devices to communicate with a head-end unit. In some implementations, the telemetry data stream and audio level adjustment commands can be sent using IPTV communication.

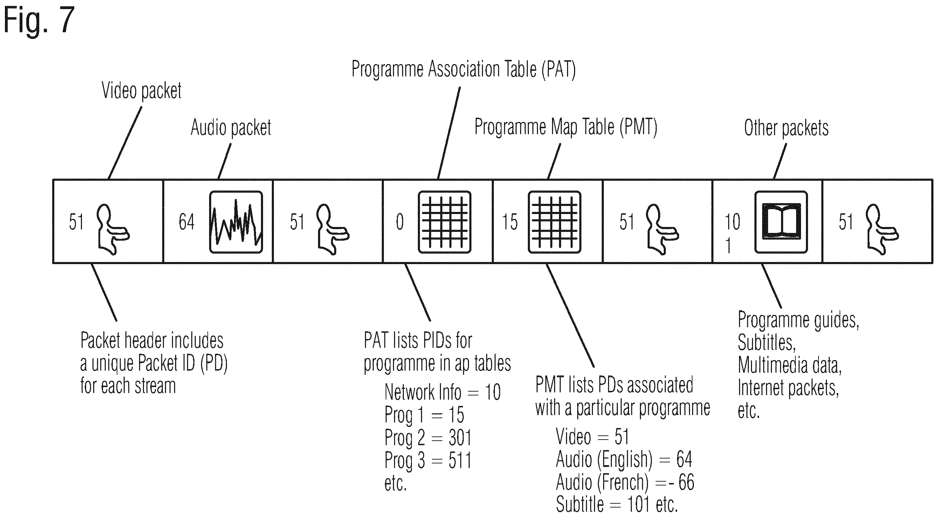

Figure 6 shows a schematic view of a system 600 for automatically adjusting an audio level according to further embodiments described herein. Figure 7 shows a DVB signalling packet.

Although an Internet connection is beneficial for data transfer from the user device(s) to the cloud, downstream messages can be sent without an Internet connection, as it is shown in figure 6. For example, broadcast networks can deliver non-content data packed in MPEG-2 TS packets in "Other Packets" as shown in figure 7. Thus, DVB-S, DVB-T, and DVB-C standards can be used to send recommended audio level information in TS packets and may be standardized. Further, the information may include a cluster identifier and may be applied by a receiving user device according to its own cluster ID (user or audience segmentation) reported previously from services or calculated on the client side e.g. depending on watching patterns.

Figure 7 shows an exemplary DVB packet. Messages can be put in the "Other Packets" frame by the head-end unit. This enables non-connected user devices to use the crowd behaviour for an automatic audio level adjustment.

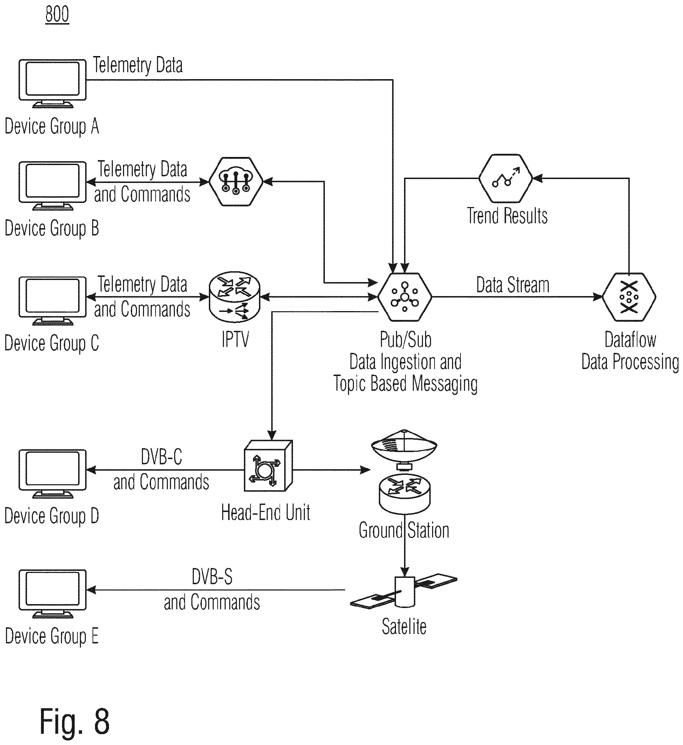

Figure 8 shows a schematic view of a system 800 for automatically adjusting an audio level according to further embodiments described herein.

In figure 8, communication and information sharing among different networks is shown. In this case, non-connected user devices can also profit from the crowd behaviour since telemetry data can be collected from connected user devices, wherein the resulting trend analysis can be provided to all user devices.

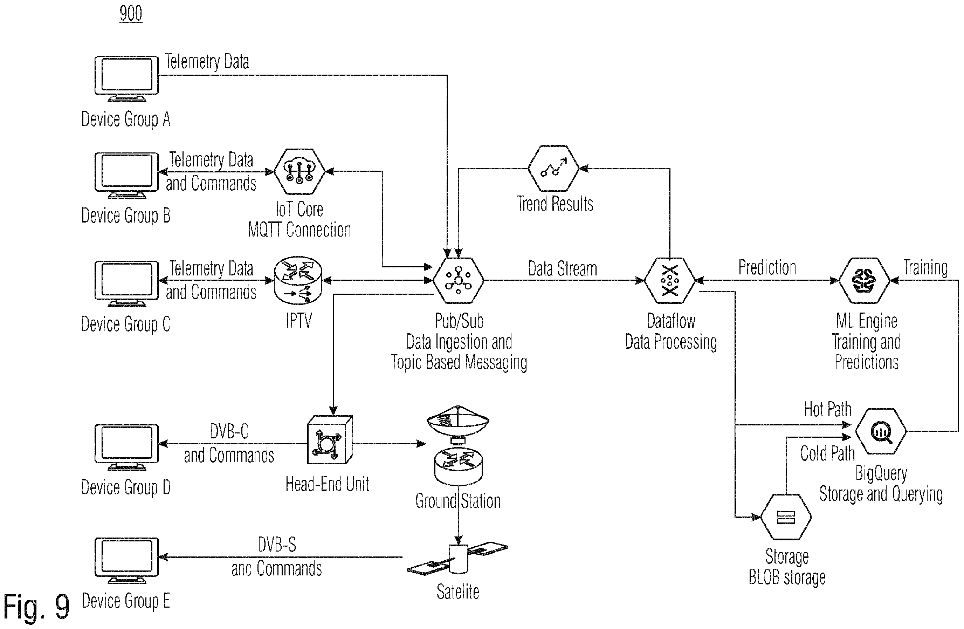

Figure 9 shows a schematic view of a system 900 for automatically adjusting an audio level according to further embodiments described herein, and in particular illustrates audience clustering and cluster-based trend analytics. The system 900 includes a ML (Machine Learning) unit.

In more detail, figure 9 shows an exemplary architecture for data storage in the cloud and a machine learning training for clustering the users or audiences depending on watching and audio level patterns. If the training is done offline (i.e., not instantly or in real-time), data is stored and then used to train a model. There is no immediate requirement for data, and front buffers may optimize the costs of cloud services. Data is stored as a file whenever the data size reaches a predetermined limit. Streaming inserts can also be used for an immediate storage of the data. These options are shown in figure 9 as cold and hot paths. For simplicity, not all possible architectures are shown. For example, a training by reading data from a BLOB storage is possible and does not require data to be loaded to a database (not shown).

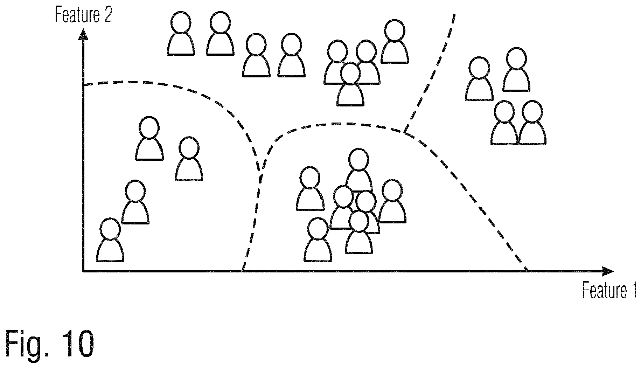

Figure 10 illustrates audience clustering (Hands-On Machine Learning with Scikit-Learn and TensorFlow). The users or audience may be grouped into clusters, and cluster-based trends can be analysed. In this way, results may be more appropriate to users or audiences in that cluster.

In particular, the system may recognize user patterns of audio levels and their commonalities with the crowd to adjust audience-based weights to increase or decrease their effect in the calculations e.g. by defining them as outlier or leader.

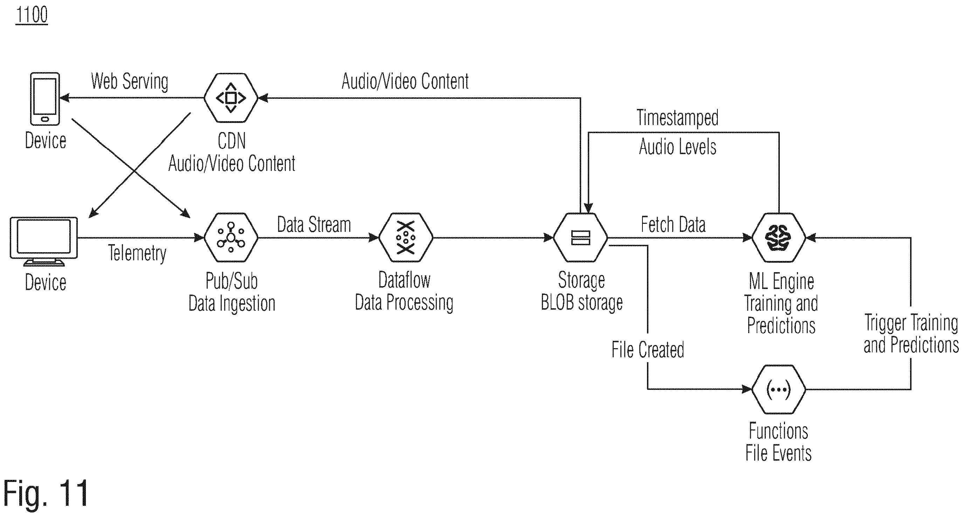

Figure 11 shows a schematic view of a system 1100 for automatically adjusting an audio level according to further embodiments described herein.

In the case of on-demand contents, stream processing is not required. In figure 11, the data processing block is used for pre-processing and buffering purposes (if required). Hence, the telemetry data is still streamed and buffered on the cloud-side. Then, the trend analytic runs in batches with schedules such as daily or on events such as when a new file is created. The results are stored and sent to user devices only when the corresponding content is requested. In one example, embedded audio data of the content may be altered depending on the results.

In the following, an exemplary processing of audio level data is described. However, it is to be understood that the present disclosure is not limited to the following examples.

According to some embodiments, the audio level data is normalized according to one of the following (but is not limited thereto):

a) a maximum output power of speakers (total)

b) a volume bar minimum, maximum and current value

c) a recommended watch distance according to a screen size

d) a RMS of an audio signal

The normalization may be done by the user device (edge), but may also be done in the cloud if the required information is provided to the cloud service.

The user devices (receiver units) make necessary calculations based on the normalized recommended audio level e.g. according to one of the above characteristics a) to d), and then set the audio volume.

For example, in the case of DVB-T/S/C, the TS packets may contain the recommended audio level for the frame, and the level is also normalized.

In some embodiments, the normalized value range is [0,1] or [0,100], but is not limited thereto.

For a decision on an action, such as volume up/down, a minimum required sample size (of connected devices) can be determined with the formula shown in equation (1) or with a known population size (device count) with the formula shown in equation (2).

$$\eta_0 = \frac{z^2 p(1-p)}{e^2}$$

Equation (1): Cochran's sample size formula
where, $\eta_0$ is the calculated minimum sample size, $z$ is the z-score according to a preferred confidence level, $p$ is a probability parameter (when unknown, it can be 0.5), and e is the error margin.

$$\eta = \frac{\eta_0}{1 + \frac{\eta_0 - 1}{N}}$$

Equation (2): sample size with known population size
where, $\eta$ is the calculated minimum sample size with known population size, $\eta_0$ is Cochran's sample size, and $N$ is the population size.

In some implementations, a sample size threshold may be set and below this threshold, the processing unit may be paused, commands may not be sent etc.

In an exemplary embodiment, by using the above formulas, a current confidence level may be calculated using the current connected device count and reverse lookup of the z-score. A threshold for the confidence level may be set to send commands to user devices or processing data, as described above.

According to the central limit theorem, when increasing the sample size, the probability distribution approaches a normal distribution. Hence, when not a large number of the devices capable of streaming are connected to a service provider, anomalies or multimodalities may occur.

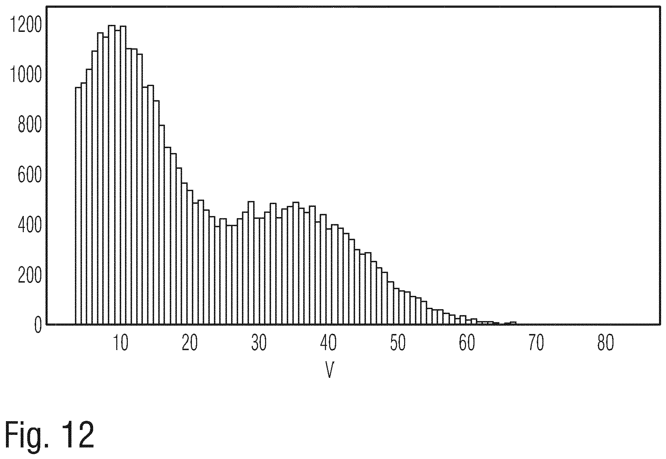

An exemplary multimodal frequency distribution of a normalized audio level with synthetic data is shown in figure 12. This may result in sample demographics, such as gender, age, ethnicity, residence, presence of children, education level, size of the screen, volume of the environment etc. The clustering may be a solution up to a point, assuming that not all of the features of the entities are known. Thus, a Bayesian approach to a Gaussian Mixture Model can be used to split up multimodal distributions with Expectation Maximization.

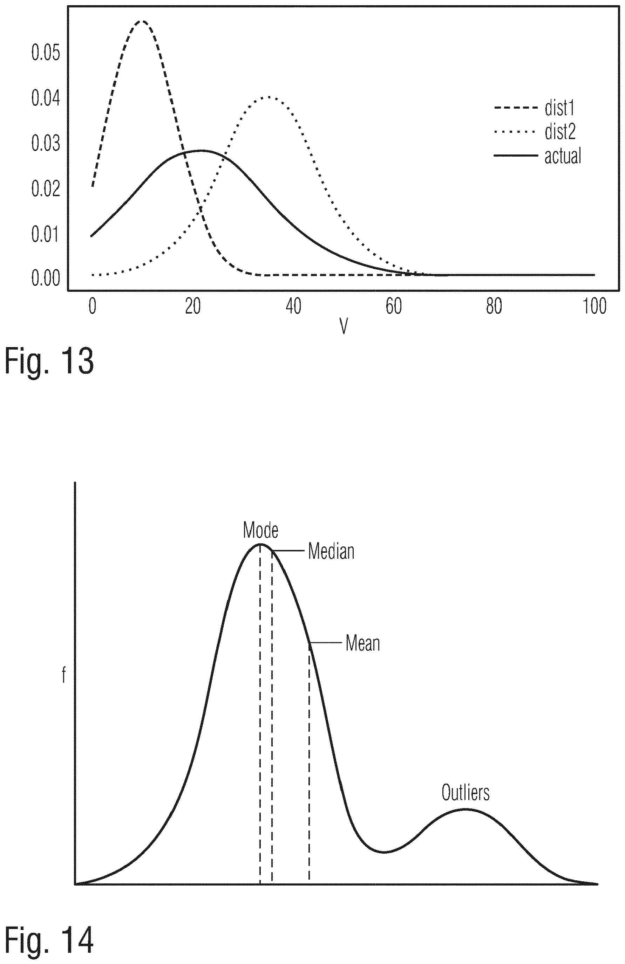

For example, the data shown in figure 12 can be spitted into 2 components as shown in figure 13. There are several ways to apply algorithms. For example, Dirichlet Processes or Dirichlet Distribution can be used as a prior weight concentration.

Parameters, which can be used in the model, are the sample statistics of the Sliding Time Window (mean, mode, median, variance, skewness, kurtosis (Fisher's), sample count, minimum, maximum, quartiles and rate of change of these values). See also figure 14.

Equation (3) and Equation (4) show Fisher's skewness and kurtosis respectively.

$$\gamma_1 = \frac{\mu_3}{\mu_2^{\frac{3}{2}}} = \frac{\mu_3}{\sigma^3}$$

Equation (3): Fisher skewness

$$\gamma_2 = \frac{\mu_4}{\mu_2^2} = \frac{\mu_4}{\sigma^4} - 3$$

Equation (4): Fisher kurtosis

Sample statistics are the inputs of the trend analyser, and the output is the recommended crowd audio level that will be sent to the user devices.

When approaching the normal distribution, mean, mode and median are getting closer (all the same), and skewness and kurtosis get closer to 0. These values can also be used to test the normality. A Kolmogorov-Smirnov test can be used to test a component count in the sample. A Shapiro-Wilk test can be used to test the normality. A Pearson chart or Fisher chart can be used to determine a distribution family.

In an exemplary embodiment, handcrafted programs can be coded to determine the trends. For example, if a variance is below a predefined threshold, then the mean value may be sent as recommended audio level.

According to some embodiments, a ML (Machine Learning) model can be trained. For example, the parameters listed above are the inputs of the system and the recommended audio level is the output. By processing historical data and shifting the target attribute (mean, mode or median) by defined time horizons, the system can be trained in a supervised manner. In more detail, sample statistics of a time $t_n$ is the input and the mean (or mode or median) value of $t_{n+1}$ is the output value. By applying supervised learning rules to the model and updating the model's weights and hyperparameters, the desired system can be modelled.

In some implementations, SMA (Simple Moving Average), WMA (Weighted MA), EMA (Exponential MA), Moving Median etc. filters can be applied to Sliding Time Windows to smooth the data.

The present invention provides an automatic audio level adjustment of audio or audio/visual content according to a crowd behaviour by sending telemetry data from user devices to the cloud and processing the data stream using, for example, Sliding Time Windows. In some embodiments, trend analytics of the audio level of the content is determined by, for example, statistical methods and/or machine learning models, and the results are sent to the user devices to change the audio level for live streams or stored in an audio level file which contains timestamps and corresponding audio levels for on-demand contents.

While the foregoing is directed to embodiments of the disclosure, other and further embodiments of the disclosure may be devised without departing from the basic scope thereof, and the scope thereof is determined by the claims that follow.

## Claims

1. A method (100) of automatically adjusting an audio level, comprising:

   providing (110), by a plurality of user devices, telemetry data to a cloud-based service;
   detecting (120), by the cloud-based service, a crowd behaviour of users of the plurality of user devices based on the telemetry data; and
   adjusting (130) an audio level of at least one user device in real-time based on the detected crowd behaviour.

2. The method (100) of claim 1, wherein the telemetry data is related to content provided to users of the plurality of user devices.

3. The method (100) of claim 2, wherein the content is provided to the plurality of user devices and/or the at least one user device in a live stream.

4. The method (100) of any one of claims 1 to 3, further comprising:
sending, by the could-based service, an audio level adjustment command to the at least one user device to adjust the audio level.

5. The method (100) of claim 4, wherein:

the telemetry data are sent via a first communication channel and the audio level adjustment command is sent via a second communication channel different from the first communication channel, preferably wherein the first communication channel uses HTTP and/or the second communication channel uses MQTT; or
the telemetry data and the audio level adjustment command are sent via the same communication channel, preferably using MQTT.

6. The method (100) of claim 4 or 5, wherein the audio level adjustment command received by the at least one user device is only executed if a predetermined period of time has elapsed since a manual audio level adjustment has been performed.

7. The method (100) of any one of claims 4 to 6, wherein the audio level adjustment command is normalized based on one of the following:

- a maximum output power of speakers,
- a volume bar minimum, maximum and current value,
- a recommended watch distance according to a screen size, or
- a RMS of an audio signal.

8. The method (100) of claim 7, wherein the audio level adjustment command is normalized by the cloud-based service or the at least one user device.

9. The method (100) of any one of claims 4 to 8, wherein the audio level adjustment command is included in a DVB signalling packet.

10. The method (100) of any one of claims 1 to 9, wherein the plurality of user devices which provide telemetry data are a first group of user devices, and wherein:

the at least one user device of which the audio level is adjusted belongs to the first group of user devices; or
the at least one user device of which the audio level is adjusted belongs to a second group of user devices different from the first group.

11. The method (100) of any one of claims 1 to 10, wherein detecting, by the cloud-based service, a crowd behaviour of users of the plurality of user devices based on the telemetry data includes:
performing trend analysis of the telemetry data.

12. The method (100) of claim 11, wherein the trend analysis is based on Sliding Time Windows.

13. The method (100) of claim 11 or 12, wherein the trend analysis uses Machine Learning, particularly for audience clustering.

14. A system for automatically adjusting an audio level, comprising:

a plurality of user devices configured to provide telemetry data to a cloud-based service; and
cloud resources implementing the cloud-based service, wherein the cloud resources are configured to detect a crowd behaviour of users of the plurality of user devices based on the telemetry data and to adjust an audio level of at least one user device in real-time based on the detected crowd behaviour.

15. The system of claim 14, wherein the system is configured to implement the method (100) of any one of claims 1 to 13.

100

providing, by a plurality of user devices, telemetry data to a cloud-based service — 110

detecting, by the cloud-based service, a crowd behaviour of users of the plurality of user devices based on the telemetry data — 120

adjusting an audio level of at least one user device of the plurality of user devices in real-time based on the detected crowd behaviour — 130

## Fig. 1

200

210

220

Telemetry Data
Commands

Devices

IoT Core
MQTT Connection

HTTP

Pub/Sub
Data Ingestion and
Topic Based Messaging

Trend Results

Data Stream

Dataflow
Data Processing

## Fig. 2

10.0.0.0/24

10.0.0.2

10.0.0.3

10.0.0.10

10.0.0.55

10.0.0.99

NAT

10.0.0.1    88.66.88.66

WWW

Fig. 3

400

Telemetry Data

Device Group A

HTTP

Trend Results

Data Stream

Commands

Device Group B

HTTP

IoT Core
MQTT Connection

Pub/Sub
Data Ingestion and
Topic Based Messaging

Dataflow
Data Processing

Fig. 4

500

Trend Results

Data Stream

Devices    IPTV    Head-End Unit    Pub/Sub
Data Ingestion and
Topic Based Messaging    Dataflow
Data Processing

# Fig. 5

600

Telemetry Data

Trend Results

Device Group A

Data Stream

Ground Station    Head-End Unit    Pub/Sub
Data Ingestion and
Topic Based Messaging    Dataflow
Data Processing

RF

Device Group B    Satelite

# Fig. 6

# Fig. 7

Video packet

Audio packet

Programme Association Table (PAT)

Programme Map Table (PMT)

Other packets

| 51 | 64 | 51 | 0 | 15 | 51 | 10 1 | 51 |

Packet header includes
a unique Packet ID (PD)
for each stream

PAT lists PIDs for
programme in ap tables

Network Info = 10
Prog 1 = 15
Prog 2 = 301
Prog 3 = 511
etc.

PMT lists PDs associated
with a particular programme

Video = 51
Audio (English) = 64
Audio (French) =- 66
Subtitle = 101 etc.

Programme guides,
Subtitles,
Multimedia data,
Internet packets,
etc.

800

Telemetry Data

Device Group A

Telemetry Data
and Commands

Device Group B

Trend Results

Telemetry Data
and Commands

Device Group C          IPTV

Data Stream

Pub/Sub
Data Ingestion and
Topic Based Messaging

Dataflow
Data Processing

DVB-C
and Commands

Device Group D          Head-End Unit

Ground Station

DVB-S
and Commands

Device Group E

Satelite

# Fig. 8

Fig. 9

Fig. 10

1100

Fig. 11

Fig. 12

Fig. 13

Fig. 14

| | Europäisches Patentamt European Patent Office Office européen des brevets | **EUROPEAN SEARCH REPORT** | Application Number EP 19 18 4611 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/374423 A1 (ANDERSON GLEN J [US]) 28 December 2017 (2017-12-28) * paragraph [0006] * * paragraph [0011] * * paragraph [0029] - paragraph [0031] * * paragraph [0059] * * paragraph [0061] * * paragraph [0065] * * paragraph [0075] - paragraph [0076] * * paragraph [0081] * ----- | 1-15 | INV. H04N21/233 H04N21/25 H04N21/258 H04N21/439 H04N21/442 H04N21/485 H04N21/6543 H04N21/658 H04N21/422 |
| A | US 2012/239963 A1 (SMITH GERARD [GB]) 20 September 2012 (2012-09-20) * paragraph [0006] * ----- | 1-15 | |
| A | US 2012/278331 A1 (CAMPBELL RAY [US] ET AL) 1 November 2012 (2012-11-01) * the whole document * ----- | 1-15 | |
| | | | TECHNICAL FIELDS SEARCHED (IPC) H04N |

The present search report has been drawn up for all claims

| Place of search | Date of completion of the search | Examiner |
|---|---|---|
| The Hague | 23 August 2019 | Ong, Bee |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 4611

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2019

| Patent document cited in search report | | Publication date | Patent family member(s) | | Publication date |
|---|---|---|---|---|---|
| US 2017374423 | A1 | 28-12-2017 | US 2017374423 A1<br>WO 2017222645 A1 | | 28-12-2017<br>28-12-2017 |
| US 2012239963 | A1 | 20-09-2012 | CA 2770760 A1<br>EP 2501127 A1<br>US 2012239963 A1 | | 14-09-2012<br>19-09-2012<br>20-09-2012 |
| US 2012278331 | A1 | 01-11-2012 | NONE | | |

EPO FORM P0459

For more details about this annex : see Official Journal of the European Patent Office, No. 12/82